# EUROPÄISCHE PATENTSCHRIFT

(11) **EP 0 674 557 B1**
(45) Veröffentlichungstag und Bekanntmachung des Hinweises auf die Patenterteilung: **06.10.1999**
(21) Anmeldenummer: 94900050.9
(22) Anmeldetag: 18.11.1993
(51) Int. Cl.: B23B 27/14, B23B 51/04

(54) **SCHNEIDEINSATZ**
CUTTING INSERT
PLAQUETTE DE COUPE

(30) Priorität: 21.11.1992 DE 4239236
(43) Veröffentlichungstag der Anmeldung: 04.10.1995
(73) Patentinhaber: Widia GmbH, 45145 Essen (DE)
(72) Erfinder: HINTZE, Wolfgang, D-45138 Essen (DE); KNICKENBERG, Bernd, D-45355 Essen (DE)
(74) Vertreter: Vomberg, Friedhelm, Dipl.-Phys.
(86) Internationale Anmeldenummer: DE9301108
(87) Internationale Veröffentlichungsnummer: WO9412302

(56) Entgegenhaltungen:
- EP-A- 0 054 913
- EP-A- 0 066 091
- EP-A- 0 084 612
- EP-A- 0 143 758
- EP-A- 0 506 078
- METALWORKING PRODUCTION Bd. 136, Nr. 7 , Juni 1992 , LONDON GB Seite 26 XP000275724 '+50% metal feed rates'
- SOVIET PATENTS ABSTRACTS Week 9142, 4. Dezember 1991 Derwent Publications Ltd., London, GB; AN 91-309265/42 & SU,A,1 611 583 (LENGD ORGPRIMTVERDO)

## Beschreibung

Die Erfindung betrifft einen vieleckigen Schneideinsatz mit auf der Spanfläche angeordneten erhabenen längsrippenförmigen Spanformelementen, die im Abstand von der Schneidkante in einer Reihe nebeneinander angeordnet sind deren Längsachsen zu in der Spanflächenebene liegenden Schneidkantennormalen spitze Winkel bilden, wobei der Rippenbogenkamm im Längsrippenprofil ein Minimum und im schneidkantenferneren Bereich mindestens die gleiche Höhe wie ein mittleres Spanflächenplateau aufweist.

Ein solcher Schneideinsatz ist aus der US-A-4 969 779 bekannt.

Die EP 0 506 078 A3 zeigt u.a. einen viereckigen Schneideinsatz mit auf der Spanfläche angeordneten erhabenen längsrippenförmigen Spanformelementen, die im Abstand von der Schneidkante in einer Reihe nebeneinander angeordnet sind und deren Längsachsen entweder senkrecht zur Schneidkante oder unter einem spitzen Winkel verlaufen. Die längsrippenförmigen Spanformelemente sind im Längsprofil entweder konvex gewölbt ausgebildet oder besitzen einen parallel zum Schneidkantenniveau verlaufenden Kamm ohne Maximum. Der mittlere Spanflächenbereich der Schneideinsätze ist gegenüber einer an die Schneidkante angrenzenden 0°-Fase abgesenkt.

Aus der DE-A-22 31 631 ist ein Schneidwerkzeug mit einer Spanbrechernut bekannt, in der mindestens ein kegelstumpfförmiger Vorsprung in einer Schneidecke vorgesehen ist.

Es ist auch schon vorgeschlagen worden, in einer Spanbrechernut nebeneinander eine Vielzahl von kugelsegmentartigen Spanformelementen anzuordnen.

Die genannten Schneideinsätze sind jedoch aufgrund der Anordnung der Spanformelemente und der Spannutgeometrie nur in einem begrenzten Bereich unterschiedlicher Schnittbedingungen, wie etwa unterschiedlicher Schnittiefen und Vorschubgeschwindigkeiten, verwendbar. Um die Einsatzmöglichkeit der Schneideinsätze zu erhöhen und zur besseren Formung und Entfernung des Schneidspanes ist in der DE 31 48 535 C2 vorgeschlagen worden, die Spanformelemente im wesentlichen pyramidenstumpfförmig mit im wesentlichen dreieckiger Grundfläche auszubilden, wobei jeweils eine der Grundflächenbegrenzungslinien in Richtung der benachbarten Schneidkante entweder parallel hierzu oder auf einer Bogenlinie ausgerichtet bzw. angeordnet ist.

Nach der DE 28 10 824 A1 wird bei einem Schneideinsatz vorgeschlagen, im Zentrum der Oberseite eine Erhebung (Plateau) anzuordnen, die als Vieleck ausgebildet sein kann und der Grundform des Schneideinsatzes entspricht. Insbesondere können die Ecken der als Vieleck ausgebildeten Erhebung auf die Mitte der Schneiden ausgerichtet, im übrigen jedoch ringförmig ausgebildet sein. Es sind auch schon solche Schneideinsätze bekannt, bei denen der zentrale Spanbrecher als Spanformstufe ausgebildet ist, wobei sich die Spanformerhebung bis in den Schneideckenbereich erstreckt. Der Nachteil solcher Ausführungsformen besteht darin, daß beim Schneiden ein erhöhter Druck entsteht, der zu einem frühzeitigen Schneideinsatzverschleiß führen kann. Ebenso ist die erreichbare Schneidqualität unbefriedigend.

Um auch bei stark differierenden Vorschüben bzw. Schnittiefen sowie Schnittgeschwindigkeiten ein ausgeglichenes gutes Spanbildungsverhalten zu gewährleisten, ist weiterhin in der EP 0 278 083 A1 vorgeschlagen worden, in dem sich auf der Spanfläche rechtwinklig zur Schneidkante an die Fase anschließenden Bereich einen Spanwinkel von mehr als 30° vorzusehen, wobei der Spanwinkel mit zunehmendem Abstand von der Fase kleiner wird und in den zwischen den Schneideckenbereichen liegenden Spanflächenbereichen des Schneidkörpers in Spanablaufrichtung verlaufende und mit Seitenabstand nebeneinander angeordnete Spanrippen aus der Spanfläche herausragend vorzusehen, zwischen denen weitere Erhebungen mit Auflauframpen liegen. Im Eckenbereich befinden sich drei nebeneinander angeordnete Graterhebungen, deren beiden äußeren mit ihren Gratlängsachsen parallel zu den ihnen benachbarten Spanrippen verlaufen.

Auflauframpen besitzt auch der (Stech-)Schneideinsatz nach der US-A-4 992 008, wobei diese Rampen unmittelbar bis an die Schneidecke angrenzen und in einer breiten, sich in Richtung von der Schneidkante weg verjüngenden Dachfläche eines länglichen Spanformelementes mit trapezförmigem Querschnitt fortsetzen.

Die in der EP 0 168 555 A1 oder auch der EP 0 222 317 A1 dargestellten Schneideinsätze besitzen ein mittleres gegenüber den Schneidecken bzw. Schneidkanten erhabenes Plateau, von dem sich in Richtung zur Schneidkante hin kugelsegmentförmige Vorsprünge erstrecken, die ggf. in eine dort liegende Spanformnut hineinragen.

Aus der EP 0 414 241 A2 sind auch Schneideinsätze mit Einkerbungen bekannt, welche die Schneidkante durchbrechen und somit sickenförmige Schneidkantenausbildungen zeigen. Diese Ausführungsform besitzt jedoch eine verschleißanfällige, zu Ausbrüchen neigende Schneidkante.

Kugelsegmentartige Spanformelemente führen beim Spanablauf zwar zu einer gewünschten Spanverformung, jedoch wird der Span weder seitlich noch in Spanablaufrichtung ausreichend geführt, so daß ein seitliches Ausbrechen des Spanes mit der Folge droht, daß ggf. infolge mangelnder Überdehnung des Spanes kein Spanbruch oder nur ein unzureichender Spanbruch erfolgen kann. Länglich gestreckte Spanformelemente bieten zwar eine bessere Führung des Spanes in Ablaufrichtung, jedoch ist mitunter die Anlagefläche an die Rippe zu gering, so daß der Span leicht seitlich ausbrechen kann. Die geschilderten Spanauflauframpen wiederum sind konstruktionsbedingt sehr verschleißanfällig.

Ausgehend von diesem Stand der Technik liegt der vorliegenden Erfindung die Aufgabe zugrunde, den eingangs genannten Schneideinsatz hinsichtlich der Ausbildung der Spanformelemente dahingehend zu verbessern, daß bei relativ großem Anfangskrümmungsradius des Spanes, insbesondere, wenn der Spanformer bei kleinem Vorschub eingesetzt wird, eine möglichst große Aufbiegung des Spanes möglich ist. Weiterhin soll aufgabengemäß der Schneideinsatz in einem möglichst breiten Vorschubbereich verwendbar sein, wobei bei großem Vorschub einem zu geringen Anfangskrümmungsradius bzw. einem zu engen Einrollen des Spanes entgegengewirkt werden kann.

Diese Aufgabe wird durch den Schneideinsatz nach Anspruch 1 gelöst. Der Rippenbogenkamm weist bezogen auf die Werkzeug-Bezugsebene ein im schneidkantenferneren Bereich liegendes Maximum oder eine gleiche Höhe wie ein gegenüber den Schneidkanten und -ecken erhöhtes mittleres Spanflächenplateau auf. Der Abstand des Rippenbogenkammes nimmt gegenüber einer Spanformnut oder der Spanbasisfläche mit größer werdendem Abstand zur Schneidkante über eine Strecke, die mindestens der halben Rippenlänge, Vorzugsweise zwei Drittel der Rippenlänge, entspricht, kontinuierlich oder stufenweise zu.

Hierbei geht die Erfindung von folgenden Überlegungen aus:

Der Spanbruch beruht darauf, daß der ablaufende Span in einem Querschnitt bis zur Bruchdehnung deformiert wird. Der Spanbruch kann sowohl über den Spanquerschnitt als auch über die Anfangskrümmung beeinflußt werden, die dem Span durch das Spanformelement des Schneideinsatzes erteilt wird. Es ist zwar bekannt, daß sich der Spanbruch bei Erhöhung der Spandicke verbessert, jedoch wird die Spandicke im wesentlichen durch den zu bearbeitenden Werkstoff und die sonstigen Bearbeitungsbedingungen vorgegeben.

Der Schaffung eines möglichst kleinen Anfangskrümmungsradius zur Begünstigung des Spanbruches stehen im allgemeinen die Nachteile der hiermit verbundenen erhöhten Zerspankräfte und die damit verbundene zunehmende Belastung des Schneideinsatzes entgegen. Dazu kommen dynamische Kräfte, die bis zu unzulässigen Schwingungen im Zerspanungsprozeß sowohl in der Frequenz als auch in der Amplitude führen können. Dies ist insbesondere unter labilen Bearbeitungsbedingungen, wie beispielsweise bei schlanken Werkstücken, beim Stechen, bei der Innenbearbeitung und beim Bohren kritisch. Im Extremfall kann es zu einem Spänestau im Spanformer und zum Werkzeugbruch kommen.

Umgekehrt kann der Anfangskrümmungsradius auch nicht beliebig größer gewählt werden, da dann der Span, um zu brechen, weiter aufgebogen werden muß. Dementsprechend entstehen insgesamt längere und "offenere" Späne, Spanlocken und Spanstücke. Hierbei wächst die Gefahr, daß der Span durch den Spanformer nur noch ungenügend geführt wird und unter Einwirkung der Kräfte und Momente, die mit dem Spanbruchvorgang verbunden sind sowie aufgrund seiner Größe, in der Lage ist, dem sich durch das Spanformelement ergebenden Hindernis auszuweichen. Dies kann zu unerwünschten Wirrspänen führen. Durch die Längsrippen nach der vorliegenden Erfindung werden jedoch in den Spanquerschnitt versteifende Sicken eingeformt, und zwar in der Nähe der Schneide, wo der Span sehr gut plastisch verformbar ist. Durch den Abstand der Rippen von der Schneidkante wird gleichzeitig der ansonsten vorhandene Verschleißangriff minimal gehalten, so daß die Gefahr von Ausbrüchen an der Schneidkante gering gehalten wird. Die Längsrippen bieten aufgrund ihrer Ausbildung, insbesondere ihrer Länge eine verbesserte Spanführung, die einem seitlichen Ausweichen des Spanes entgegenwirkt. Hierdurch kann der Span auf größere Radien bis zum Bruch aufgebogen werden. Das im schneidkantenferneren Bereich liegende Maximum oder der Anstieg der erhabenen längsgestreckten Spanformelemente bis zur Höhe des mittleren Spanflächenplateaus sorgen dafür, daß auch bei stark aufgebogenem Span die seitliche Führung nicht abnehmen kann oder verlorengeht. Insbesondere wird der Kontakt des ablaufenden Spanes und damit die Reibung zur Spanablauffläche auf ein Minimum reduziert, wodurch höhere Standzeiten der Schneideinsätze erreicht werden. Die Ausgestaltung der Spanfläche durch Schaffung von Zwischenräumen zwischen den Rippen schafft eine hervorragende Zugänglichkeit für Kühlmittel, was ebenfalls die Lebensdauer (Standzeit) des Schneideinsatzes verbessern hilft. Schließlich haben die Rippen einen stabilisierenden Verstrebungseffekt hinsichtlich der Schneidkante.

Weiterbildungen der Erfindungen sind in den Unteransprüchen 2 bis 12 beschrieben, die vorteilhafterweise dazu dienen, eine exponierte Lage der Rippenmaxima in Verbindung mit einer konvexen Krümmung des Rippenlängsprofiles zum Scheitelpunkt hin zu schaffen, wodurch ein zusätzlicher Raum entsteht, in dem der Span noch stärker überdehnt bzw. umgebogen werden kann. Die geschilderten Krümmungen verstärken die Sickeneinformung, wenn der Span infolge des Anlaufens gegen ein Hindernis auf den Schneideinsatz gedrückt wird.

Nach einer weiteren Ausgestaltung der Erfindung kann der Schneideinsatz vorzugsweise jeweils entlang der Schneidkante mindestens eine Spanformnut oder eine Spanflächenerhebung aufweisen und/oder im Anschluß an die Schneidkante eine Fase besitzen.

Soweit nicht ein erhabenes Spanflächenplateau vorgesehen ist, in dessen Höhe der Rippenbogenkamm endet, kann das Spanflächenplateau gegenüber den Schneidkanten und/oder -ecken abgesenkt sein.

Nach einer Weiterbildung der Erfindung ist der maximale Abstand und/oder das Maximum des Rippenbogenkammes gegenüber der Spanformnut oder der Spanbasisfläche in dem - in Längsrichtung gesehen - weitest von der Schneidkante entfernten Drittel, vorzugsweise Viertel der Rippenlänge angeordnet.

Zwischen dem Minimum des Rippenkammes und der Schneidkante des Rippenkammes kann der Rippenkamm gegenüber einer Werkzeug-Bezugsebene ein Maximum aufweisen, das vorzugsweise die Fase in der Höhe überragt.

Der Rippenkamm kann im Bereich des schneidkantenferneren Maximums, das hinter dem Minimum liegt, in Längsrichtung konvex gekrümmt, scharfkantig konvex oder sattelförmig ausgebildet sein. Im übrigen kann der Rippenkamm im Längsquerschnitt wellenförmig, vorzugsweise mit einer konkaven Krümmung im vorderen 2/3-Bereich der Längsachse und/oder bereichsweise gerade und/oder spitzwinklig ausgebildet sein.

Nach einer weiteren Ausgestaltung der Erfindung laufen die Rippen zur Schneidkante hin unstetig in die Spanformnut, den abfallenden Bereich derselben, die Fase oder die Basisfläche aus. Alternativ oder zusätzlich können die Rippen zur Schneidkante hin tangential in die Fase, die Spanformnut oder den abfallenden Bereich derselben oder die Spanfläche einlaufen.

Die Rippen sind im Querschnitt etwa parallel zur Schneidkante im wesentlichen konvex, sattelförmig, trapezförmig, vorzugsweise mit konvexen und/oder konkaven Abschnitten, ausgebildet.

Vorzugsweise weisen die Rippen Seitenflanken auf, die zur Spanformnut oder der Spanbasisfläche scharfkantig oder asymptotisch (tangential) abgerundet auslaufen. Der maximale Flankenwinkel der Längsrippen in Längsrichtung beträgt 80°, vorzugsweise 60°. Die Länge der Rippen liegt zwischen 0,7 mm bis 5 mm, vorzugsweise 1 mm bis 2,5 mm, und/oder das Verhältnis der Rippenlänge zur maximalen Basisbreite (gemessen in Höhe der Spanformnut oder der Spanbasisfläche) beträgt 1,2 bis 4, vorzugsweise 1,5 bis 3.

Nach einer weiteren Ausgestaltung der Erfindung nimmt die Basisbreite der Rippe in Längsrichtung mit wachsendem Abstand von der Schneidkante kontinuierlich oder stufenweise zu, wobei vorzugsweise die maximale Basisbreite in der von der Schneidkante entfernter liegenden Rippenhälfte, vorzugsweise im letzten Rippendrittel der Rippenlänge liegt. Alternativ hierzu kann die Basisbreite der Rippe über die gesamte Rippenlänge auch konstant sein.

Nach einer Ausbildung der Erfindung beträgt die maximale Höhendifferenz, d.h., der maximale Abstand zwischen dem Rippenkamm und der Spanformnut oder der Spanbasisfläche 0,05 mm bis 1,5 mm, vorzugsweise 0,1 mm bis 0,7 mm. Der zwischen den Rippenkämmen, d.h., den Rippenmittellinien, gemessene Abstand benachbarter Rippen beträgt vorzugsweise das 1,5- bis 10fache der maximalen Basisbreite, insbesondere das 2- bis 4fache der maximalen Basisbreite, wobei pro Schneidkante mindestens zwei Rippen vorgesehen sein können, insbesondere vier bis zehn Rippen.

In einer weiteren Ausführungsform der Erfindung erstrecken sich die Rippen von der Schneidkante aus gleich weit oder weiter zur Spanflächenmitte hin als die Spanformnut.

Der Schneideinsatz besitzt in einer besonderen Ausgestaltung der Erfindung in einer Spanflächendraufsicht eine im wesentlichen rechteckige Kontur, wobei zwei gegenüberliegende Seitenflächen mit ihren Schneidkanten in der Mitte zu einer Einschnürung gewölbt sind, so daß sie jeweils einen stumpfen Winkel an der Bruchstelle bilden und daß jede der vier gebildeten Schneidecken eine als Nebenschneidkante ausgebildete Verlängerung aufweist, die gegenüber den längeren Seitenflächen einen Vorsprung bildet, der unter einem spitzen Winkel in die längere Seitenfläche übergeht, wobei vorzugsweise vier Rippen pro Schneidkante vorhanden sind und der Abstand der inneren Rippen zur Mittelachse 5 bis 20 %, vorzugsweise 10 bis 16 %, der Schneideinsatzbreite beträgt, der Abstand der äußeren Rippen zur Mittelachse 35 bis 45 %, vorzugsweise 39 bis 41 %, der Schneideinsatzbreite und/oder die inneren Rippen gegenüber der Mittelachse um einen Winkel von -5° bis 13°, vorzugsweise 2° bis 9°, eingeschwenkt sind, die äußeren Rippen um einen Winkel von -5° bis 20°, vorzugsweise 2° bis 16°. Der Abstand der Rippenspitze von der Schneidkante liegt nach einer Ausgestaltung der Erfindung zwischen 0,05 und 0,7 mm, vorzugsweise zwischen 0,1 mm bis 0,3 mm.

In einer weiteren Ausführungsform weist der Schneideinsatz in seiner Spanflächendraufsicht eine Trigonform auf, bei der die Schneidkanten eine dachförmige Ausbuchtung unter Bildung eines stumpfen Winkels besitzen und wobei der Schneideinsatz hinsichtlich einer durch die stumpfe Ecke der dachförmigen Ausbuchtung und einer gegenüberliegenden Schneidecke definierten Längsachse auch durch Anordnung der Spanformelemente spiegelsymmetrisch ausgebildet ist. Vorzugsweise ist auf den Längsachsen im Bereich der stumpfen Ecken jeweils ein Spanformelement angeordnet.

Nach einer weiteren Ausgestaltung der Erfindung nimmt das schneidkantenferne Maximum des Rippenbogenkammes oder dessen mit dem Spanflächenplateau übereinstimmende Höhe von den spitzwinkligen Ecken zu den stumpfwinkligen Ecken oder zur Schneidkantenmitte hin stetig oder sprunghaft ab, wobei vorzugsweise die Abstände oder Höhendifferenzen zwischen den Rippenbogenkämmen und der Basisfläche und/oder der Schneidkante von den spitzwinkligen Schneidecken zu den stumpfwinkligen Ecken oder zur Schneidkantenmitte stetig oder sprunghaft abnehmen.

Die lateralen Abstände der Rippenbogenkämme können zur Schneidkante von den spitzwinkligen Schneidecken zu den stumpfen Ecken oder zur Schneidkantenmitte hin stetig oder sprunghaft abnehmen.

Alternativ hierzu ist es nach einer weiteren Ausführungsform der Erfindung auch möglich, daß die Abstände des schneidkantenferneren Maximums der Rippenbogenkämme oder deren mit dem Spanflächenplateau übereinstimmende Höhe zwischen den spitzwinkligen Schneidecken zur Schneidkantenmitte oder den stumpfwinkligen Ecken einen maximalen Wert besitzen.

Besondere Vorteile besitzt die im Anspruch 10 beschriebene Schneideinsatzgeometrie, die bei Bohrern, in die der Schneideinsatz eingesetzt wird, bewirkt, daß je nach Überdeckung bzw. Bohrerdurchmesser das bzw. die beiden von einer Schneide erzeugten Spansegmente nahezu mittig geführt oder seitlich geführt und umgelenkt und konisch eingerollt werden.

Insbesondere für sogenannte Kurzlochbohrer werden W-Schneideinsätze eingesetzt, die eine Trigonform aufweisen, bei der die Schneidkanten eine dachförmige Ausbuchtung unter Bildung eines stumpfen Winkels besitzen. Um solche Schneideinsätze sowohl rechts- wie linksdrehend als Innen- oder Außenschneide einzusetzen, ist vorgesehen, daß die Spanformelemente symmetrisch bezüglich einer Längsachse abgeordnet und ausgebildet sind, die durch eine Schneidecke als Winkelhalbierende und durch die Schneidkantenmitte der gegenüberliegenden Schneidkante, nämlich der dortigen stumpfen Ecke verläuft.

Insbesondere bei Wendeschneidplatten mit einer Klemmbohrung, und hier vor allem bei positiven Wendeschneidplatten mit konischer Bohrungsansenkung, herrschen eingeschränkte Platzverhältnisse auf der Spanfläche. Um diesen Verhältnissen Rechnung zu tragen, wird das schneidkantenferne Maximum des Rippenbogenkammes oder dessen mit dem Spanflächenplateau übereinstimmende Höhe von den spitzen (Schneid)-Ecken zu den stumpfen Ecken bzw. der Schneidkantenmitte hin stetig oder sprunghaft abnehmend ausgebildet. Eine entsprechende stetige oder sprunghafte Abnahme kann auch hinsichtlich der Abstände, d.h. der Höhendifferenzen zwischen den Rippenbogenkämmen und der Basisfläche in demselben benannten Bereich vorgesehen sein. Auch ist es möglich, die Abstände der Rippenspitzen zur Schneidkante von den (spitzen) Schneidecken zu den stumpfen Ecken stetig oder sprunghaft abnehmend vorzusehen. Zielsetzung der vorbeschriebenen Maßnahmen ist es, eine ausreichende Stabilität bzw. einen Schutz des Senkungskragens an der engsten Stelle bei gleichmäßiger Spankrümmung über die Spanbreite zu erreichen.

Alternativ dazu ist es auch möglich, die mittlere Rippe zwischen einer Schneidecke und der Schneidkantenmitte relativ höher als die umliegenden Rippen auszubilden, um eine dort stärkere Verformung des Spanquerschnittes zu erreichen.

Schließlich kann die Rippenanordnung auch so gewählt werden, daß die Schneidplatten nur links- oder rechtsschneidend verwendbar sind.

Ausführungsbeispiele der Erfindung sind in den Zeichnungen dargestellt. Es zeigen
- Fig. 1: eine Draufsicht auf eine im wesentlichen rechteckige Schneidplatte mit zwei Schneidkanten und jeweils vier Spanformelementen pro Schneidkante,
- Fig. 2: eine dreieckige Schneidplatte mit jeweils sechs Spanformelementen pro Schneidkante,
- Fig. 3a bis h: jeweils Längsschnitte entlang eines Spanform-Elementes,
- Fig. 4a bis c: jeweils Querschnitte entsprechend Fig. 3h entlang der Linien A, B und C,
- Fig. 5a: einen Längsschnitt durch ein Spanformelement und
- Fig. 5b bis p: jeweils Querschnitte entlang der Linien I -I bis III - III,
- Fig. 6a: einen Querschnitt durch eine andersartige Ausführungsform von Spanformelementen,
- Fig. 6b: eine Draufsicht auf die Spanformelemente nach Fig. 6a und
- Fig. 7a und b: vergleichende Ansichten des Spanablaufes bei erfindungsgemäßen Schneideinsätzen (Fig. 7b) und bei nach dem Stand der Technik bekannten Schneideinsätzen (Fig. 7a),
- Fig. 8a: eine Draufsicht auf eine weitere Ausführungsform eines Schneideinsatzes,
- Fig. 8b: eine schematische Ansicht der in einen Bohrer eingesetzten Schneidplatte nach Fig. 8a beim Schneiden in einem Bohrloch,
- Fig. 9a bis d: verschiedene Schneideinsätze in Draufsicht,
- Fig. 10: Schnittansichten entlang der Schnittlinien A - A, B - B und C - C entsprechend Fig. 9 und
- Fig. 11: entsprechende Schnittlinien entlang einer weiteren Ausführungsform und
- Fig. 12: eine Draufsicht auf eine ausschließlich links- bzw. rechtsschneidende Schneidplatte.

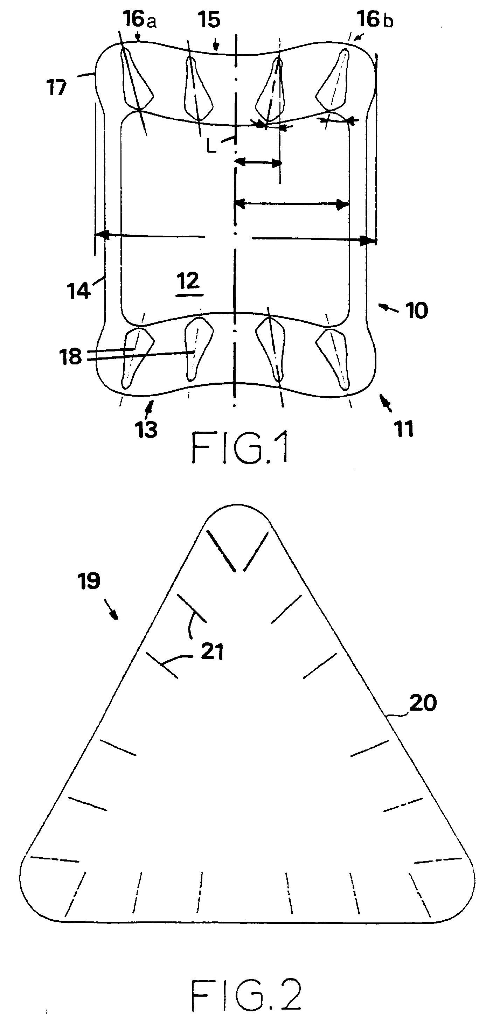

Der in Fig. 1 dargestellte Schneideinsatz 10 besitzt eine im wesentlichen viereckige Grundform mit vier Schneidecken 11, welche die Spanfläche 12 zusammen mit den Schneidkanten 13 sowie den Längsseitenkanten 14 begrenzen. In nach dem Stand der Technik bekannter Weise kann der Schneideinsatz ein Befestigungsloch (nicht dargestellt) besitzen. Jede der beiden gegenüberliegenden Schneidkanten 13 besitzt eine etwa in der Mitte befindliche Einschnürung 15 sowie beidseitig und achsensymmetrisch hierzu zwei vorstehende Bereiche 16a und 16b in abgerundeter Ausführung. Zur Seite hin an jeder Ecke 11 besitzt der Schneideinsatz 10 Verlängerungen 17, die im wesentlichen zur Längsachse L parallel angeordnet sind. Diese Verlängerungen 17 dienen beim Vortrieb eines Bohrers, in dem der Schneideinsatz eingesetzt wird, als Nebenschneidkante. Die Nebenschneidkante hat etwa eine Länge, die der Vorschublänge bei einer Umdrehung des Bohrers entsprechen soll. Sie liegt etwa in der Größenordnung bis zu 4/10 mm. Als Überbrückung von der Nebenschneidkante 17 zu der langen Seitenfläche 14 dient eine Abschrägung, die unter einem Winkel von bis zum 25° verläuft. Der Schneideinsatz weist jeweilige längsrippenförmige erhabene Spanformelemente 18 auf, deren Längsachsen so ausgerichtet sind, daß sie in Richtung des Spanablaufes ragen. Im Falle des rechtwinkligen Schneideinsatzes nach Fig. 1 bedeutet dies konkret, daß der Winkel der Längsachsen der Spanformelemente 18, den diese mit der Längsachse 11 des Schneideinsatzes 10 bilden, zur Einschnürung 15 hin kleiner wird.

In Fig. 2 ist ein im wesentlichen dreieckiger Schneideinsatz 19 dargestellt, der drei Schneidkanten 20 aufweist. Die rippenförmigen Spanformelemente, von denen nur die Längsachsen 21 dargestellt sind, weisen ebenfalls etwa in Spanablaufrichtung, wobei der Winkel ihrer Längsachsen 21 mit der Mittelsenkrechten einer Schneidkante zur Schneidkantenmitte hin kleiner wird. Die in Fig. 1 und 2 dargestellten Schneideinsätze sind nur exemplarisch aufgeführt, grundsätzlich können alle bekannten Polygonformen sowie Wendeplatten mit kreisförmiger Schneide mit den dargestellten rippenförmigen Spanformelementen bestückt werden. Die Rippen 18 können im Querschnitt eine gleichbleibende Breite entlang ihrer gesamten Längsachse aufweisen oder zu schneidkantenferneren Bereichen hin breiter werden, wie dies in Fig. 1 angedeutet ist.

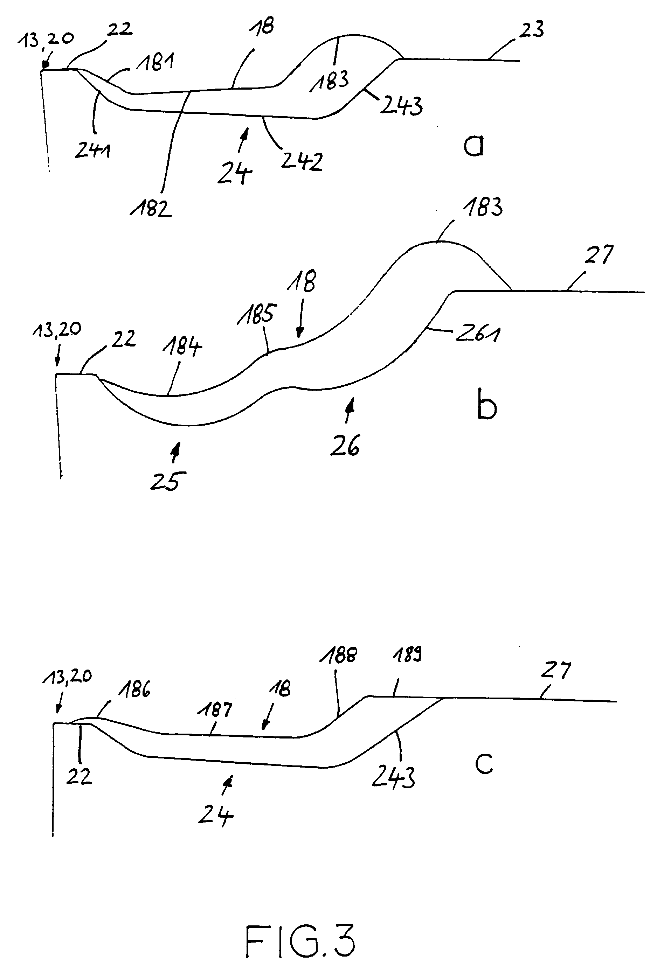

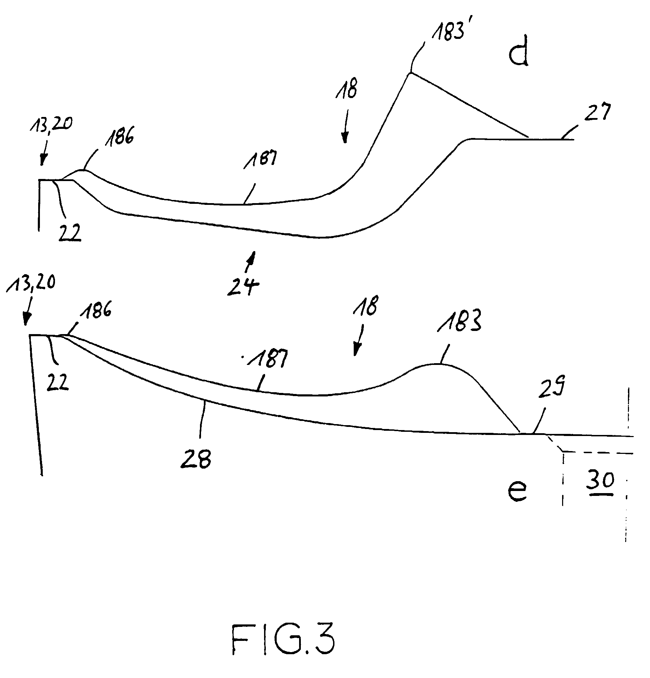

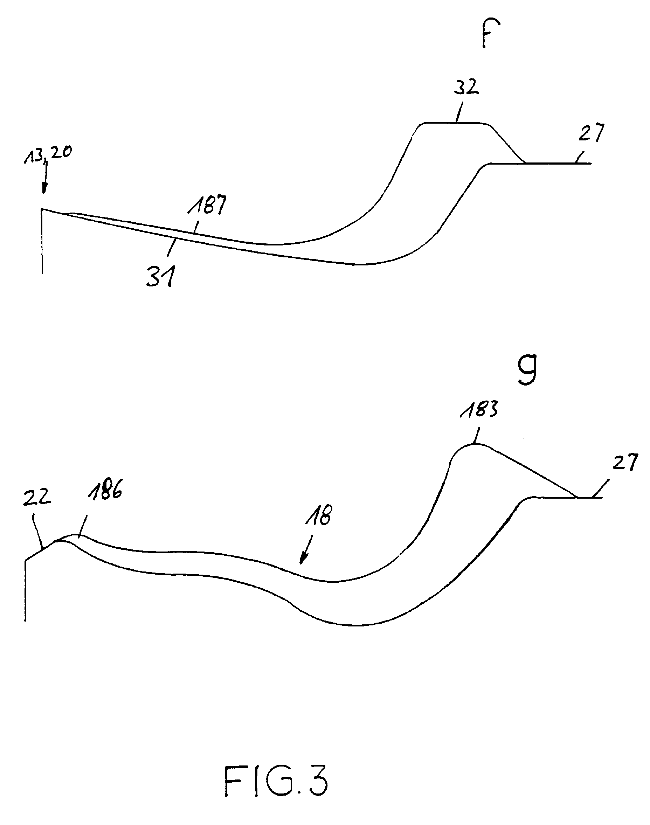

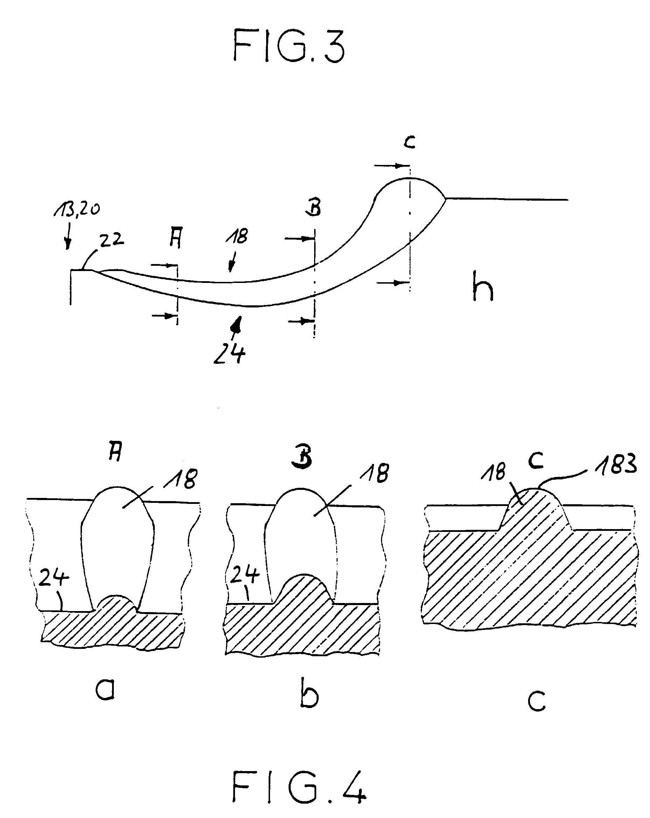

Die unterschiedlichen Gestaltungsmöglichkeiten des Längsprofiles offenbart Fig. 3.

Wie aus Fig. 3a zu ersehen, kann hinter der Schneidkante 13 oder 20 zunächst eine Fase 22 - hier unter einem Winkel von 0° - angrenzen. Auf die Fase folgt eine Spanformnut 24 mit einem abfallenden Flankenteil 241, einem nur noch flach abfallenden Teil 242 und einer Anstiegsflanke 243 bis hin zu einem Plateau 23 in der Spanflächenmitte. Die gesamte Spanformnut 24 überbrückt das Spanformelement 18, das im schneidkantennächsten Bereich in Höhe der Fase 22 ausläuft und zur Schneidkantenmitte zunächst einen abfallenden Bereich 181, anschließend einen leicht ansteigenden Bereich 182 und schließlich einen konvex gewölbten Bereich 183 aufweist, wobei diese konvexe Wölbung ein Maximum durchläuft, das oberhalb der durch das Plateau 23 definierten Ebene liegt. Das Spanformelement läuft auf dem Plateau "hinter" der Spanformnut 24 aus. Im Unterschied zu der Ausgestaltung nach Fig. 3a schließlich sich bei der Ausführungsform nach Fig. 3b an die Fase 22 eine Spanformnut 25 an, hinter der jedoch eine weitere nutförmige Ausnehmung 26 folgt, die nur eine geringfügige Senke enthält, da deren größter Bereich eine Anstiegsflanke hin zu einem erhabenen Plateau 27 bildet, das die Schneidkanten bzw. die angrenzende Fase 22 deutlich überragt. Das Spanformelement 18 läuft im abfallenden Teil der ersten Spanformmulde 25, also hinter der Fase 22 aus. Dieses Spanformelement besitzt eine leicht wellige Rippenkammkontur mit einem ersten Minimum sowie einer leicht konvexen Ausbuchtung 185 im ansteigenden Bereich zum Maximum 183. Die Spanformrippe mündet im Bereich des Plateaus 27 deutlich hinter dessen Grenzbereich zur Anstiegsflanke 261.

Die Spanformmulde der Ausführungsform nach Fig. 3c entspricht etwa der Spanformmulde 24 nach Fig. 3a, so daß auf vorstehende Ausführungen verwiesen wird. Entsprechendes gilt für die Fase 22 sowie für das Plateau 27 (siehe Beschreibung zu Fig. 3b). Das Spanformelement 18 läuft etwa mittig in der Fase 22 zur Schneidkante 13 oder 20 hin aus und geht in Richtung der Längsachse über ein Maximum 186 in einen konkaven Bereich über, dessen mittlere Zone 187 etwa parallel der Plateaufläche 27 bzw. parallel der Fase 22 verläuft, aber unterhalb dieser. Im Anschluß an diese horizontal ausgerichtete Zone 187 besitzt das Spanformelement 18 eine Anstiegsflanke 188 bis hin zu einer Höhe, die der Plateauebene 27 entspricht. Von dort aus geht das Spanformelement in einen Horizontalteil 189 über und mündet im Grenzbereich des Plateaus 27 zur Anstiegsflanke 243 der Mulde 24. Das Spanformelement nach Fig. 3d besitzt gegenüber dem Rippenkamm nach Fig. 3c ein höher ausgeprägtes erstes Maximum 186 sowie einen mittleren Bereich 187, der jedoch leicht konkav mit großem Radius gekrümmt ist. Das Maximum 183' ist nahezu spitzwinklig ausgebildet, wobei von diesem Maximum 183' die jeweiligen Anstiegs- und Abstiegsflanken in Längsrichtung gesehen nahezu geradlinig verlaufen.

Bei der Ausführungsform nach Fig. 3e geht die Fase 22 in einen abfallenden konvex gekrümmten Spanformteil 28 mit abgesenktem Mittelteil 29 über, in dem noch eine Lochbohrung 30 angedeutet ist. Das Spanformelement 18 geht über ein flach verlaufendes Maximum 186 in einen konvexen Bereich 187 sowie ein Maximum 183 Über, das jedoch unterhalb der durch die Fase 22 definierten Ebene liegt. Das Spanformelement 18 läuft im Bereich des abgesenkten Mittelteiles aus.

Bei der Ausführungsform nach Fig. 3f schließt sich an die Schneidkante 13 bzw. 20 eine positive Fase bzw. unmittelbar ein abfallender Bereich 31 einer Spanformnut an. Die im Abstand von der Schneidkante 13 bzw. 20 beginnende Spanformrippe besitzt einen Kamm, der zunächst sanft abfällt, einen Minimalbereich durchläuft und in eine steile Anstiegsflanke bis hin zu einem sattelförmigen Plateau 32 mündet, bevor die Abstiegsflanke auf das mittlere Plateau 27 des Schneideinsatzes abfällt.

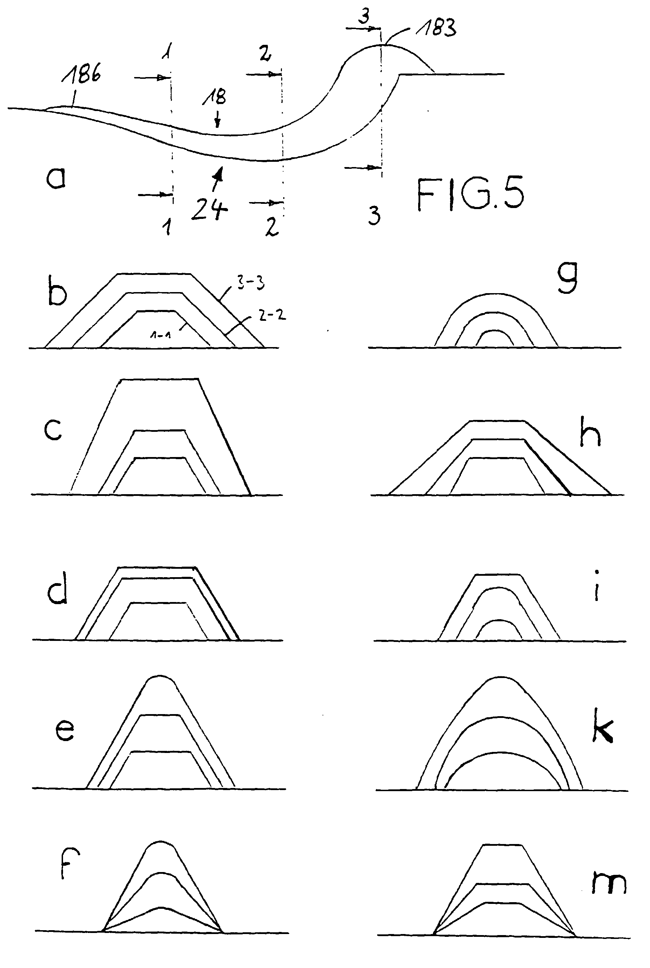

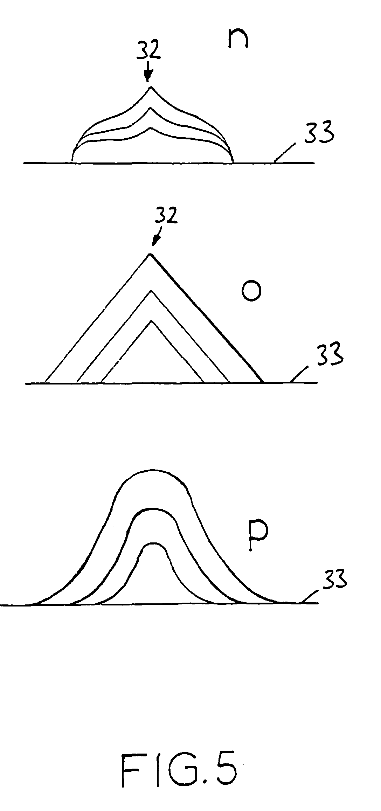

Der Schneideinsatz nach Fig. 3g besitzt eine negative Fase mit einem Anstiegswinkel, unter dem auch die Spanformrippe 18 bis zu einem ersten Maximum 186 ansteigt. Im Anschluß an dieses Maximum 186 fällt die Spanformrippe mit ihrem Kamm mit konvexen und konkaven abwechselnden Bereichen stetig ab bis hin zu einer steiler Anstiegsflanke, die in einem Maximum 183 endet. Die abfallende Flanke jenseits des Maximums 183 zum Mittelplateau 27 verläuft geradlinig. Die Ausführungsform nach Fig. 3h zeigt eine Spanrippe, die im abfallenden Teil der Spanformmulde 24 mündet und zu schneidkantenferneren Bereichen hin unterschiedliche Querschnittsformen annimmt, die bei Schnitten entlang der Linien A, B und C anhand der Fig. 4a bis c ersichtlich sind. Ein weiteres Merkmal der Spanformrippe 18 bzw. des Spanformrippenkammes oder auch oberen Grates bzw. Sattels ist Fig. 5a zu entnehmen. Vergleicht man die Abstände des Spanformrippenkammes zur Spanformnut in unterschiedlichen Entfernungen von der Schneidkante 13 bzw. 20, so ist festzustellen, daß diese Abstände kontinuierlich zu schneidkantenferneren Bereichen hin zunehmen.

Die Fig. 5b bis 5p zeigen unterschiedliche Querschnittsansichten entlang der Linien I - I, II - II und III - III, etwa parallel zur Schneidkante. Um die Querschnittsveränderungen zwischen den Schnitten übersichtlicher zu gestalten, wurde die jeweilige Basis der Schnitte gerade angenommen und übereinandergelegt, obwohl beispielsweise die Spanformnut im Schnitt II - II tiefer liegt als im Schnitt I - I. Fig. 5b bis p zeigen, daß alle Schnitte ähnliche Formen besitzen, ebenso ist erkennbar, in welchem Ausmaß die Querschnittsflächen zu schneidkantenferneren Bereichen hin in der Höhe und in der Breite wachsen. Speziell kann die Spanformrippe 18 einen trapezförmigen Querschnitt (Fig. 5b bis 5d oder 5h) besitzen. Die Querschnitte unterscheiden sich in der Basisbreite, wobei mit Basis sowohl die Fläche im Bereich der Spanfläche als auch die Breite des eben ausgeformten Rippenkammes angesprochen sein soll. Ebenso können die beidseitig des Kammes abfallenden Flanken unterschiedlich steil sein. Wie aus Fig. 5e ersichtlich, kann der Kamm von einer oberen ebenen Fläche zum Maximum 183 schließlich hin zu runden Formen verändert werden oder von vornherein, wie in Fig. 5f und 5g sowie 5k dargestellt, konvex verlaufen. Umgekehrt kann entsprechend Fig. 5i der Spanformkamm im hinteren schneidkantenfernen Bereich abgeflacht sein und in den vorderen Bereichen abgerundet. Fig. 5m zeigt, daß unterschiedliche Steigungen zwischen den einzelnen Schnittebenen möglich sind. Die Spanformrippen 18 nach Fig. 5n und 5o besitzen eine obere Gratspitze 32, von der aus die seitlichen Flanken entweder vollkommen eben (Fig. 5o) oder zunächst konvex und dann mit konkaver Krümmung in die Spanfläche 33, die ggf. auch nutförmig ausgebildet sein kann, übergeht. Wie aus Fig. 5p ersichtlich, besitzen die seitlichen Flanken 33 eine Konvexizität, aus der heraus sie in den Basisbereich tangential einmünden.

Für sämtliche Formen nach Fig. 5b bis 5p können selbstverständlich auch solche Konturverläufe bestehen, wie sie in Fig. 3a bis h dargestellt und zuvor beschrieben worden sind.

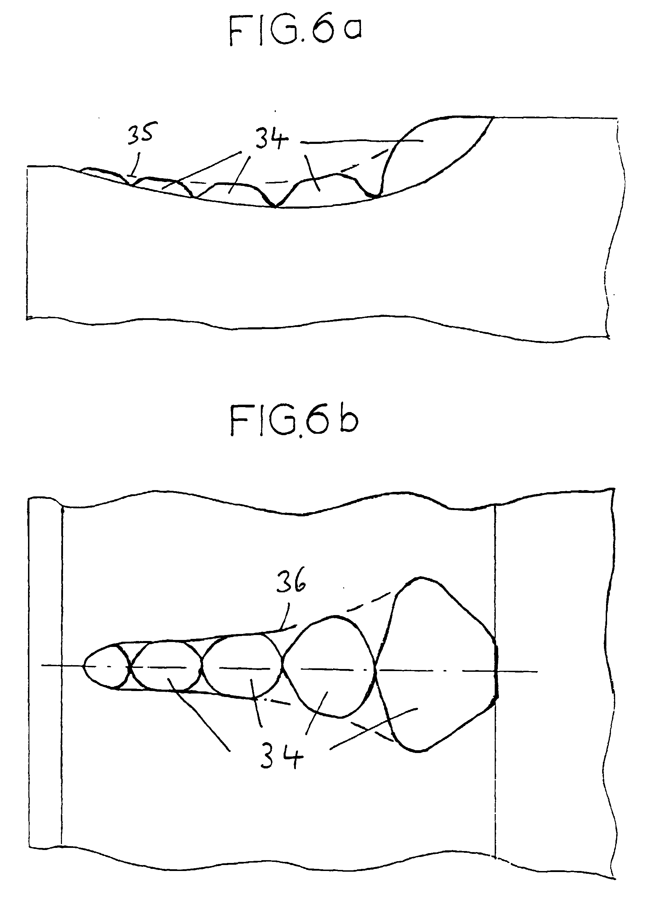

Nach einer weiteren Ausführungsform der Erfindung können sich die Rippen in Längsrichtung auch aus mehreren sich berührenden oder voneinander beabstandeten Erhebungen 34 zusammensetzen, für deren Einhüllenden 35 bzw. 36 Entsprechendes gilt wie für die zuvor beschriebenen Rippen (siehe Fig. 6a, b).

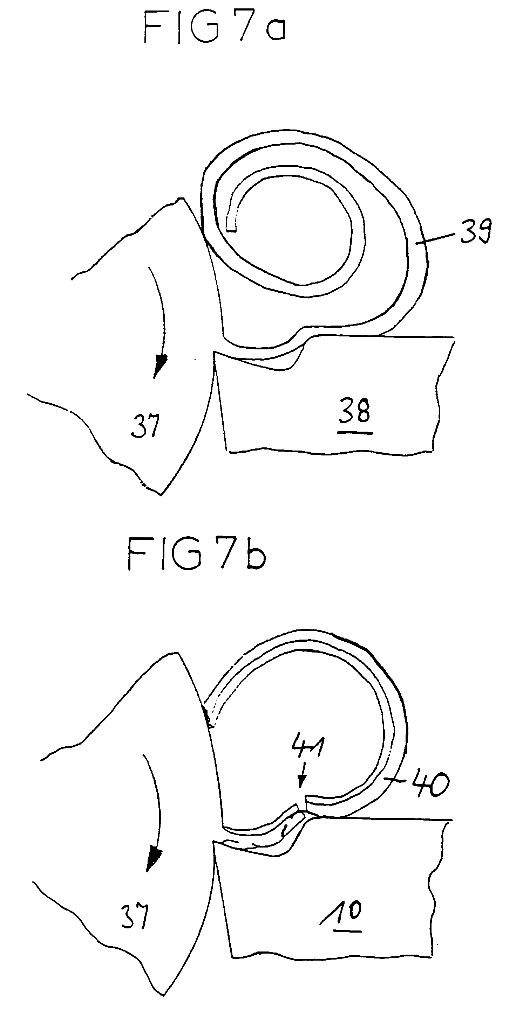

Die Wirkung des erfindungsgemäßen Schneideinsatzes wird aus Fig. 7 erkennbar, die in der Darstellung Fig. 7a den ablaufenden Span bei einer nach dem Stand der Technik bekannten Schneideinsatz und in der Fig. 7b bei einem erfindungsgemäßen Schneideinsatz zeigt. Beim Drehen des rotierenden Werkstückes 37 entsteht bei einem herkömmlichen Schneideinsatz 38 ein langer Span 39, der trotz Spanformnut und Spanleitstufe zu einem Plateau des Schneideinsatzes 38 nicht bricht, so daß es zu langen Wirrspänen kommt. Anders hingegen erfährt der Span 40 bei Verwendung des erfindungsgemäßen Schneideinsatzes 10 aufgrund seiner Überdehnung und/oder seiner besseren seitlichen Führung nach dem Anschlag an das Werkstück 37 einen Bruch (vgl. Pfeil 41), so daß es zur gewünschten Kurzspanbildung kommt.

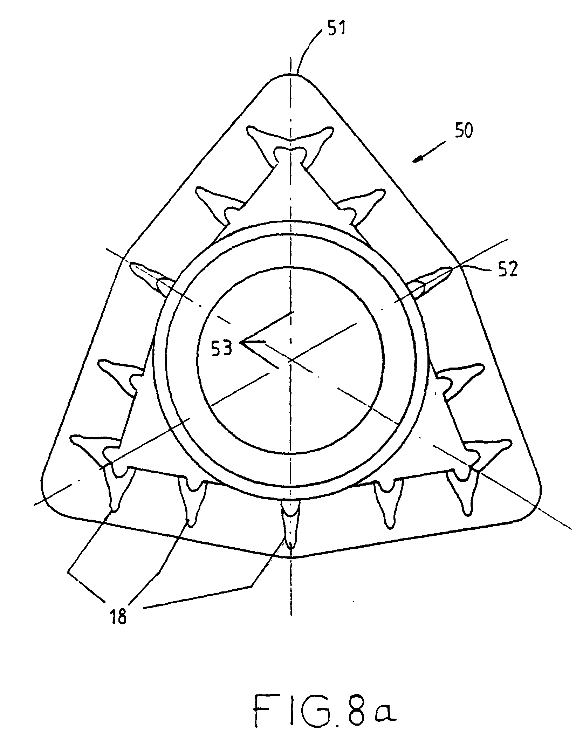

Der in Fig. 8a dargestellte Schneideinsatz 50 besitzt eine Trigonform mit drei (spitzen) Schneidecken 51 und drei stumpfen Schneidecken 52, die einen Winkel von ca. 160° bilden und die sich in der Mitte zwischen zwei spitzen Schneidecken 51 befinden. Zieht man eine Längsachse 53 durch eine spitze Schneidecke 51 und die gegenüberliegende stumpfe Schneidecke 52, so sind die Spanformelemente 18 spiegelsymmtrisch zu den jeweiligen Längsachsen 53 angeordnet. Dies schließt, wie in Fig. 8a dargestellt, auch solche Ausführungsformen ein, bei denen eine Längsachse 53 gleichzeitig Längsachse eines Spanformelementes 18 ist bzw. diese auf der Längsachse 53 liegt. Hiermit wird erreicht, daß der Schneideinsatz 50 in rechts- und linksdrehenden Werkzeugen als Innen- oder Außenschneide einsetzbar ist. Die Ausrichtung der Spanformelemente genügt hierbei der Bedingung, daß die inneren Rippen gegenüber der Mittelachse um einen Winkel von -5° bis 13°, die äußeren Rippen um einen Winkel von -5° bis 20° eingeschwenkt sein können.

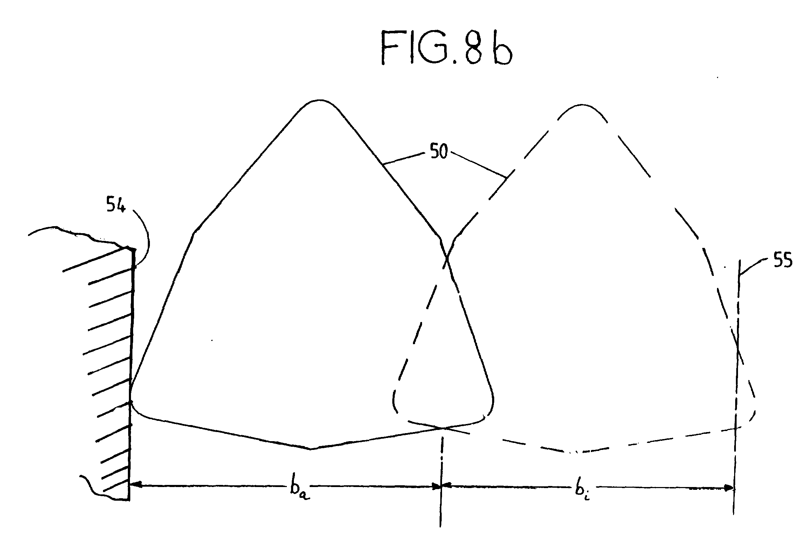

Fig. 8b zeigt Schneideinsätze 50 nach Fig. 8a im Bohreinsatz. Innerhalb einer Bohrungswand schneidet der äußere Schneideinsatz mit einer Spanbreite bₐ und der innere Schneideinsatz mit einer Spanbreite bᵢ. Die Bohrungsachse ist mit 55 bezeichnet.

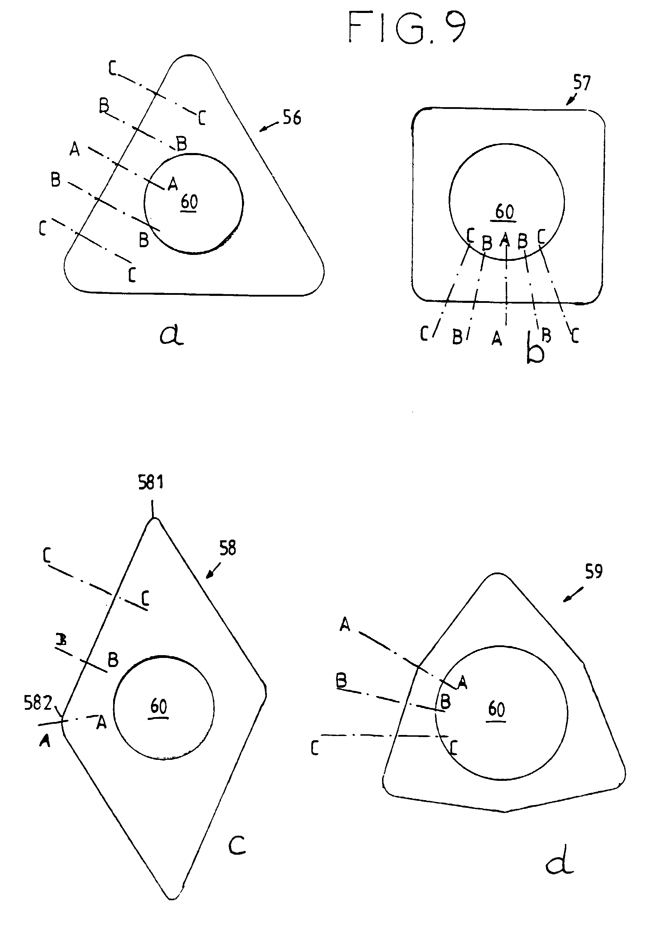

Fig. 9a bis d zeigt unterschiedliche Schneideinsätze 56 bis 59 mit Klemmbohrung 60.

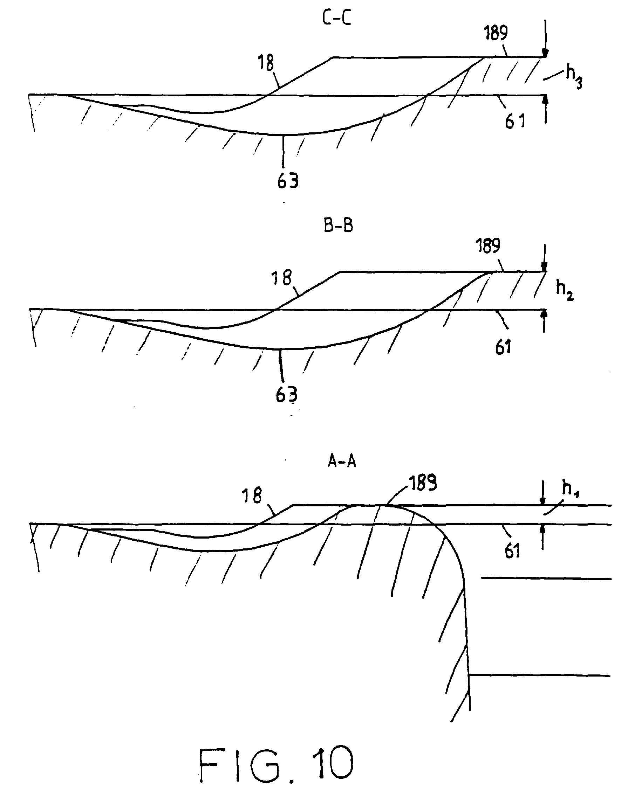

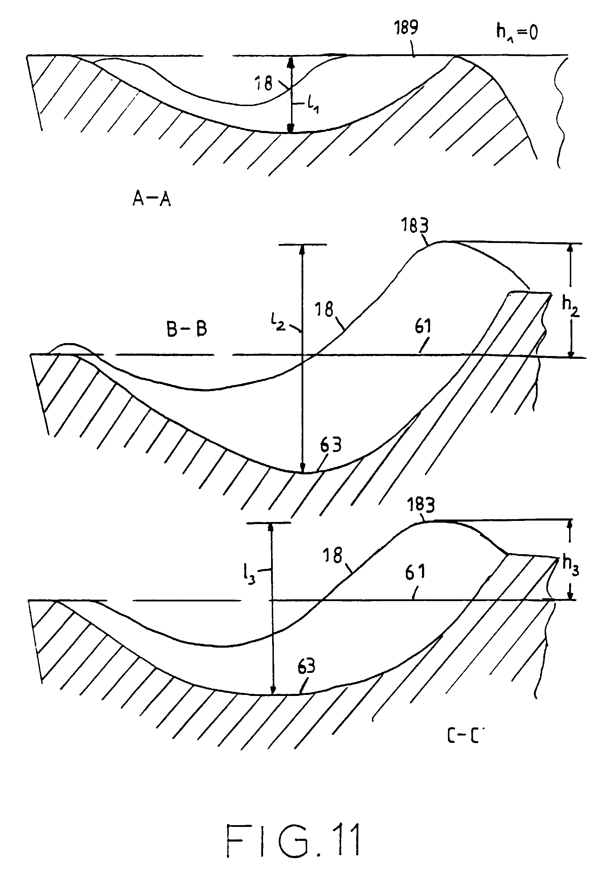

Wie im einzelnen anhand der Schnitte A - A, B - B und C - C in Fig. 10 und 11 ersichtlich, lassen sich unterschiedliche Ausführungsformen verwenden. Insbesondere bei rhombischen oder trigonförmigen Wendeschneidplatten, z.B. den genormten Formen D, K, V, W, liegt das schneidkantenferne Maximum des Rippenbogenkammes oder dessen mit dem Spanflächenplateau übereinstimmende Höhe 189 von den spitzen Ecken zu den stumpfen Ecken hin betrachtet (Schnitt C - C hin zu Schnitt A - A) in unterschiedlichen Abständen zur Schneidkante 61, d.h., die Höhen h₃ über h₂ zu h₁ nehmen kontinuierlich ab. Hiermit wird erreicht, daß die Schneideinsätze eine ausreichende Stabilität sowie einen Schutz des Senkungskragens der Klemmbohrung 60 an der engsten Stelle erhalten. Der Span wird gleichmäßig über die Spanbreite gekrümmt.

Die Abstände (Höhendifferenzen l₁ bis l₃) zwischen den Rippenbogenkämmen und der Basisfläche 63 können ebenfalls von den spitzen zu den stumpfen Ecken bzw. zur Schneidkantenmitte stetig oder sprunghaft abnehmen. Schließlich können die lateralen Abstände der Rippenspitzen zur Schneidkante von den spitzen zu den stumpfen Ecken oder der Schneidkantenmitte stetig oder sprunghaft abnehmen.

Eine weitere Möglichkeit, die Geometrien der Rippen 18 und/oder der Basisfläche auf einem Schneideinsatz zu variieren, zeigt Fig. 11, wo die mittlere auf den Span wirkende Rippe nach Schnitt B - B besonders hoch ausgeprägt ist, d.h. eine große Höhe h₂ besitzt. Diese Höhe erreicht gegenüber h₃ einen größeren Wert, während h₁ = 0 ist.

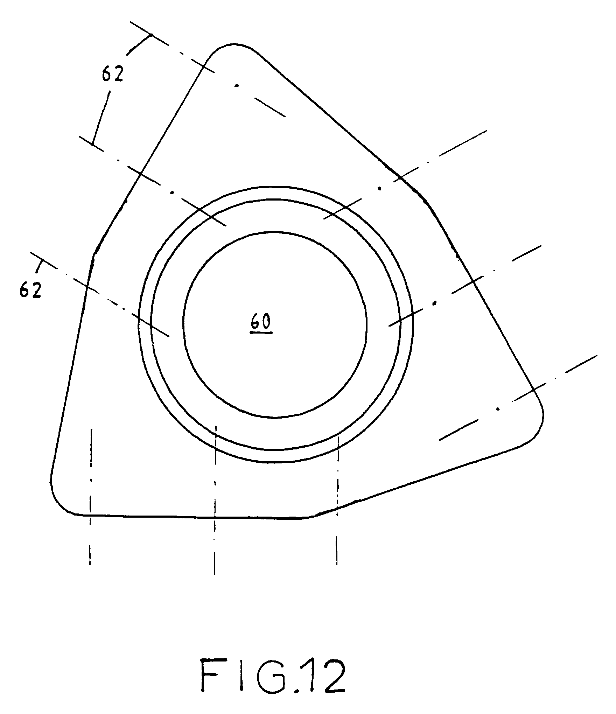

Fig. 12 zeigt anhand der dargestellten Rippen-Längsachsen 62 einen Schneideinsatz für links- bzw. rechtsschneidende Bearbeitung.

## Patentansprüche

1. Vieleckiger Schneideinsatz (10, 19) mit auf der Spanfläche (12) angeordneten erhabenen längsrippenförmigen Spanformelementen (18), die im Abstand von der Schneidkante (13, 20) in einer Reihe nebeneinander angeordnet sind und deren Längsachsen zu in der Spanflächenebene liegenden Schneidkantennormalen spitze Winkel bilden, wobei der Rippenbogenkamm im Rippenlängsprofil ein Minimum (182, 184) und im schneidkantenferneren Bereich mindestens die gleiche Höhe wie ein mittleres Spanflächenplateau (27, 29) aufweist,
**dadurch gekennzeichnet,**
daß der Rippenbogenkamm bezogen auf die WerkzeugBezugsebene ein im schneidkantenferneren Bereich liegendes Maximum (183) oder eine gleiche Höhe wie ein gegenüber den Schneidkanten (13, 20) und -ecken erhöhtes mittleres Spanflächenplateau (27) aufweist und daß der Abstand des Rippenbogenkammes (18) gegenüber einer Spanformnut (24) oder der Spanbasisfläche (28, 29, 31, 33) mit größer werdendem Abstand zur Schneidkante (13, 20) über eine Strecke, die mindestens der halben Rippenlänge, vorzugsweise zwei Drittel der Rippenlänge, entspricht, kontinuierlich oder stufenweise zunimmt.

2. Schneideinsatz nach Anspruch 1, dadurch gekennzeichnet, daß jeweils entlang der Schneidkanten (13, 20) mindestens eine Spanformnut (24) oder Spanflächenerhebung liegt und/oder im Anschluß an die Schneidkante (13, 20) eine Fase (22) vorgesehen ist.

3. Schneideinsatz nach einem der Ansprüche 1 oder 2, dadurch gekennzeichnet, daß der maximale Abstand gegenüber der Spanformnut (24) oder der Spanbasisfläche (28, 29, 31, 33) und/oder das Maximum (103) des Rippenbogenkammes (18) in dem - in Rippenlängsrichtung gesehen - weitest von der Schneidkante (13, 20) entfernten Drittel, vorzugsweise Viertel, der Rippenlänge liegen und/oder daß der Rippenkamm im Maximum (183) in Längsrichtung konvex gekrümmt, scharfkantig konvex (183) oder sattelförmig (32) ausgebildet ist.

4. Schneideinsatz nach einem der Ansprüche 1 bis 3, dadurch gekennzeichnet, daß die Rippen (18) zur Schneidkante hin unstetig in die Spanformnut (24), den abfallenden Bereich (31) derselben, die Fase (22) oder die Basisfläche (33) auslaufen und/oder daß die Rippen (18) zur Schneidkante (13, 20) hin tangential in die Fase (22), die Spanformnut (24) oder den abfallenden Bereich (31) derselben oder die Spanfläche (33) einlaufen.

5. Schneideinsatz nach einem der Ansprüche 1 bis 4, dadurch gekennzeichnet, daß die Länge der Rippen 0,7 mm bis 5 mm, vorzugsweise 1 mm bis 2,5 mm, beträgt und/oder daß das Verhältnis der Rippenlänge zur maximalen Basisbreite (gemessen in Höhe der Spanformnut (24) oder der Spanfläche (33)) 1,2 bis 4, vorzugsweise 1,5 bis 3, beträgt.

6. Schneideinsatz nach einem der Ansprüche 1 bis 5, dadurch gekennzeichnet, daß die maximale Höhendifferenz, d .h., der maximale Abstand zwischen dem Rippenkamm (18) und der Spanformnut (24) oder der Spanbasisfläche (33) 0,05 mm bis 1,5 mm, vorzugsweise 0,1 mm bis 0,7 mm, beträgt.

7. Schneideinsatz nach einem der Ansprüche 1 bis 6, dadurch gekennzeichnet, daß der zwischen den Rippenkämmen, d.h., den Rippenmittellinien, gemessene Abstand benachbarter Rippen (18) das 1,5- bis 10fache der maximalen Basisbreite beträgt, vorzugsweise das 2- bis 4fache und/oder daß pro Schneidkante mindestens zwei Rippen vorgesehen sind, vorzugsweise vier bis zehn Rippen.

8. Schneideinsatz nach einem der Ansprüche 1 bis 7, dadurch gekennzeichnet, daß er in einer Spanflächendraufsicht eine im wesentlichen rechteckige Kontur hat, wobei zwei gegenüberliegende Seitenflächen mit ihren Schneidkanten (13) in der Mitte zu einer Einschnürung (15) gewölbt sind, daß sie jeweils einen stumpfen Winkel an der Bruchstelle bilden und daß jede der vier gebildeten Schneidecken eine als Nebenschneidkante ausgebildete Verlängerung (17) aufweist, die gegenüber den längeren Seitenflächen (14) einen Vorsprung bildet, der unter einem spitzen Winkel in die längere Seitenfläche (14) übergeht, wobei vorzugsweise vier Rippen (18) pro Schneidkante (13) vorhanden sind und der Abstand der inneren Rippen zur Mittelachse 5 bis 20 %, vorzugsweise 10 bis 16 % der Schneideinsatzbreite beträgt, der Abstand der äußeren Rippen zur Mittelachse 35 bis 45 %, vorzugsweise 39 bis 41 % der Schneideinsatzbreite und/oder die inneren Rippen (18) gegenüber der Mittelachse um einen Winkel von -5° bis 13°, vorzugsweise 2° bis 9°, eingeschwenkt sind, die äußeren Rippen (18) um einen Winkel von -5° bis 20°, vorzugsweise 2° bis 16°.

9. Schneideinsatz nach einem der Ansprüche 1 bis 8, dadurch gekennzeichnet, daß der Abstand der Rippenspitze von der Schneidkante (13, 20) zwischen 0,05 und 0,7 mm, vorzugsweise 0,1 bis 0,3 mm beträgt.

10. Schneideinsatz nach einem der Ansprüche 1 bis 9, dadurch gekennzeichnet, daß er in einer Spanflächendraufsicht eine Trigonform (50) aufweist, bei der die Schneidkanten eine dachförmige Ausbuchtung (52) unter Bildung eines stumpfen Winkel besitzen und der hinsichtlich einer durch die stumpfe Ecke (52) der dachförmigen Ausbuchtung und einer gegenüberliegenden Schneidecke (51) definierten Längsachse auch durch Anordnung der Spanformelemente (18) spiegelsymmetrisch ausgebildet ist, wobei vorzugsweise auf den Längsachsen (53) im Bereich der stumpfen Ecken (52) jeweils ein Spanformelement (18) angeordnet ist.

11. Schneideinsatz nach einem der Ansprüche 1 bis 10, dadurch gekennzeichnet, daß das schneidkantenferne Maximum (183) des Rippenbogenkammes (18) oder dessen mit dem Spanflächenplateau übereinstimmende Höhe (189) von spitzwinkligen Schneidecken (51, 581) zu stumpfwinkligen Ecken (52, 582) oder zur Schneidkantenmitte hin stetig oder sprunghaft abnimmt, wobei vorzugsweise die Abstände oder Höhendifferenzen (h₁ bis h₃, l₁ bis l₃) zwischen den Rippenbogenkämmen (183, 189) und der Basisfläche (63) und/oder der Schneidkante (61) von spitzwinkligen Schneidecken (51, 581) zu stumpfwinkligen Ecken (52, 582) oder zur Schneidkantenmitte stetig oder sprunghaft abnehmen.

12. Schneideinsatz nach einem der Ansprüche 7 bis 11, dadurch gekennzeichnet, daß die Abstände des schneidkantenfernen Maximums (183) der Rippenbogenkämme (18) oder deren mit dem Spanflächenplateau übereinstimmende Höhe (189) zwischen den spitzwinkligen Schneidecken (51, 581) zur Schneidkantenmitte oder zu den stumpfwinkligen Ecken (52, 582) einen maximalen Wert (h₂) besitzen.

## Claims

1. Polygonal cutting insert (10, 19) with on the cutting surface (12) raised rib-like chip-forming elements (18) that are arranged in a row next to one another at a spacing from the cutting edge (13, 20) and which are each elongated with a respective longitudinal axis which forms an acute angle with a perpendicular to the cutting edge, the rib crest having in longitudinal sectional view a minimum height (182, 184) and having in a region remote from the cutting edge a height at least equal to that of a central cutting surface plateau (27, 29),
**characterised in that**
the crest of the rib relative to the tool reference level has a maximum height (183) remote from the cutting edge equal to or greater than a cutting-surface plateau (27) elevated above the cutting edges (13, 20) and the cutting corners and that the spacing of the crest of the rib (18) relative to the chip-forming groove (24) or the base surface (28, 29, 31, 33) increases continuously or in steps over a stretch which extends at least half the rib length, preferably two thirds of the rib length.

2. Cutting insert according to claim 1, characterised in that at least one chip-forming groove (24) or chip-surface bump is provided along each of the cutting edges (13, 20) and/or that a land (22) is provided adjacent to the cutting edge (13, 20).

3. Cutting insert according to one of claims 1 or 2, characterised in that the maximum spacing to the chip-forming groove (24) or the rake base face and/or the maximum height (183) of the rib crest (18) lies - seen in the longitudinal direction - of the rib in the third, preferably fourth, farthest from the cutting edge (13, 20) and/or that the rib crest is formed longitudinally convexly arcuate, sharply convex (183), or as a saddle (32) at the maximum height (183).

4. Cutting insert according to one of claims 1 to 3, characterised in that the ribs (18) end toward the cutting edge nonuniformly in the chip-forming groove (24), in the descending flank (31) of same, in the land (22), or in the base surface (33) and/or that the ribs (18) extend toward the cutting edge (13, 20) tangentially into the land (22), into the chip-forming groove (24), or into the descending region (31) of the same, or into the cutting surface (33).

5. Cutting insert according to one of claims 1 to 4, characterised in that the length of the ribs is 0,7 mm to 5 mm, preferably 1 mm to 2,5 mm and/or that the relationship between the rib length to the maximum base width (measured at the level of the chip-forming groove (24) or the cutting surface (33)) is 1,2 to 4, preferably 1,5 to 3.

6. Cutting insert according to claims 1 to 5, characterised in that the maximum height difference, meaning the maximum spacing between the rib crest (18) and the chip-forming groove (24) or the rake base surface (33) is 0,05 mm to 1,5 mm, preferably 0,1 mm to 0,7 mm.

7. Cutting insert according to one of claims 1 to 6, characterised in that the distance between the rib crests, meaning the rib middle lines, of adjacent ribs (18) is equal to 1,5 to 10 times the maximum base width, preferably 2 to 4 times and/or that per cutting edge there are at least 2 ribs, preferably 4 to 10 ribs.

8. Cutting insert according to one of claims 1 to 7, characterised in that it has in top view on the cutting surface a generally rectangular shape with two opposite side surfaces with their cutting edges (13) cut in in the middle to a setback (15), that they each form an obtuse angle at the interruption point and that each of the four formed cutting corners has an extension (17) formed as an auxiliary cutting edge which forms a projection relative to the longer side surfaces (14) that merges at an acute angle in the long side surface (14), whereby preferably four ribs (18) per cutting edge (13) with the spacing of the inner ribs to the central axis 5 % to 20 %, preferably 10 % to 16 %, of the cutting insert width, the spacing of the outer ribs to the central axis 35 % to 45 %, preferably 39 % to 41 % of the cutting insert width and/or inner ribs (18) forming relative to the central axis an angle of -5° to 13°, preferably 20 to 9°, and the outer ribs (18) an angle from -5° to 20°, preferably 2° to 16°.

9. Cutting insert according to one of claims 1 to 8, characterised in that the spacing of the rib point from the cutting edge (13, 20) is between 0,05 mm and 0,7 mm, preferably 0,1 mm to 0,3 mm.

10. Cutting insert according to one of claims 1 to 9, characterised in that it has in top view a triangular shape (50) with the cutting edges having a roof-shaped projection (52) forming an obtuse angle and which relative to a longitudinal axis drawn through the obtuse angle (52) of the roof-shaped projection and an opposite cutting corner (51) is mirror symmetrical even with respect to the arrangement of the chip-forming elements (18), whereby preferably one chip-forming element (18) is arranged on the longitudinal axis (53) in the region of the obtuse corner (52).

11. Cutting insert according to one of claims 1 to 10, characterised in that the maximum height (183) of the rib crest (18) remote from the cutting edge or its corresponding height (189) relative to the cutting-surface plateau decreases uniformly or in steps from the acute-angle cutting edges (51, 581) to the obtuse-angle corners (52, 582) or toward the middle of the cutting edge, whereby preferably the spacings or height differences (h₁ to h₃, l₁ to l₃) decrease uniformly or in steps between the rib crest (183, 189) and the base surface (63) and/or the cutting edge (61) from the acute-angle cutting corners (51, 581) to the obtuse-angle corners (52, 582) or to the centre of the cutting edge.

12. Cutting insert according to one of claims 7 to 11, characterised in that the spacings of the maximum height (183) of the rib crests (18) or their height (189) relative to the cutting surface plateau between the acute-angle cutting corners (51, 581) to the middle of the cutting edge or to the obtuse-angle corners (52, 582) has a maximum value (h₂).

## Revendications

1. Insert de coupe polygonal (10, 19) avec des éléments élevés à former le copeau (18) ayant la forme de nervures longitudinales, qui sont disposés sur la face de coupe (12) et en ligne l'un à côté de l'autre à une distance du tranchant (13, 20) et dont les axes longitudinaux forment des angles aigus par rapport a des normales au tranchant qui se trouvent dans le plan de la face de coupe, la crête de la nervure présentent en profil longitudinal de la nervure un minimum (182, 184) et, dans la zone située plus loin du tranchant, au moins la même hauteur qu'un plateau central (27, 29) de la face de coupe,
**caractérisé par le fait**
que la crête de la nervure, relative au plan de référence de l'outil, présente un maximum (183) se trouvant dans la zone située plus loin du tranchant ou une même hauteur qu'un plateau central (27) de la face de coupe, qui est élevé par rapport aux tranchants (13, 20) et aux coins de coupe, et que, avec une distance de plus en plus importante au tranchant (13, 20), la distance de la crête de la nervure (18) par rapport à une rainure à former le copeau (24) ou à la face de base de coupe (28, 29, 31, 33) augmente de façon continue ou progressive sur une étendue qui correspond au moins à la demi-longueur de la nervure, de préférence à deux tiers de la longueur de la nervure.

2. Insert de coupe selon la revendication 1, caractérisé par le fait que du moins une rainure à former le copeau (24) ou élévation de la face de coupe se trouve respectivement le long des tranchants (13, 20) et/ou que l'on prévoit un chanfrein (22) qui est adjacent au tranchant (13, 20).

3. Insert de coupe selon l'une des revendications 1 ou 2, caractérisé par le fait que la distance maximale par rapport à la rainure à former le copeau (24) ou à la face de base de coupe (28, 29, 31, 33) et/ou le maximum (183) de la crête de la nervure (18) se trouvent - vu dans la direction longitudinale de la nervure - dans le tiers, de préférence quart, de la longueur de la nervure, qui est éloigné le plus du tranchant (13, 20), et/ou que, dans le maximum (183), la crête de la nervure est, dans la direction longitudinale, courbée de manière convexe, convexe à vive arête (183) ou présente la forme d'une selle (32).

4. Insert de coupe selon l'une des revendications 1 à 3, caractérisé par le fait que les nervures (18) se terminent, vers le tranchant, de manière discontinue dans la rainure à former le copeau (24), dans la zone descendante (31) de celle-ci, dans le chanfrein (22) ou dans la face de base (33), et/ou que les nervures (18) s'étendent, vers le tranchant (13, 20), de manière tangentielle dans le chanfrein (22), dans la rainure à former le copeau (24) ou dans la zone descendante (31) de celle-ci ou dans la face de coupe (33).

5. Insert de coupe selon l'une des revendications 1 a 4, caractérisé par le fait que la longueur des nervures est comprise entre 0,7 mm et 5 mm, de préférence entre 1 mm et 2,5 mm, et/ou que le rapport de la longueur de la nervure à la largeur maximale de base (mesurée à la hauteur de la rainure à former le copeau (24) ou de la face de coupe (33)) est compris entre 1,2 et 4, de préférence entre 1,5 et 3.

6. Insert de coupe selon l'une des revendications 1 à 5, caractérisé par le fait que la différence maximale de hauteur, c'est-à-dire la distance maximale entre la crête (18) de la nervure et la rainure (24) à former le copeau ou la face de base de coupe (33) est comprise entre 0,05 mm et 1,5 mm, de préférence entre 0,1 mm et 0,7 mm.

7. Insert de coupe selon l'une des revendications 1 à 6, caractérisé par le fait que la distance de nervures (18) voisines, mesurée entre les crêtes des nervures, c'est-à-dire les lignes de milieu des nervures, est entre 1,5 et 10 fois plus grande que la largeur maximale de base, de préférence entre 2 et 4 fois, et/ou que l'on prévoit du moins deux nervures par tranchant, de préférence entre quatre et dix nervures.

8. Insert de coupe selon l'une des revendications 1 à 7, caractérisé par le fait que, dans une vue de dessus sur la face de coupe, il présente un contour pour l'essentiel rectangulaire, deux surfaces latérales opposées avec leurs tranchants (13) étant bombées au milieu de manière a former un étranglement (15), qu'elles forment respectivement un angle obtus sur le point de rupture et que chacun des quatre coins de coupe formés présente un prolongement (17) réalisé en tant que tranchant secondaire, qui, par rapport aux surfaces latérales (14) plus longues, forme une saillie qui débouche sous un angle aigu dans la surface latérale (14) plus longue, de préférence quatre nervures (18) étant prévues par tranchant (13) et la distance des nervures intérieures à l'axe central étant comprise entre 5 et 20 %, de préférence entre 10 et 16 % de la largeur de l'insert de coupe, la distance des nervures extérieures à l'axe central étant comprise entre 35 et 45 %, de préférence entre 39 et 41 % de la largeur de l'insert de coupe, et/ou les nervures intérieures (18) formant un angle relativement a l'axe central, qui est compris entre -5° et 13°, de préférence entre 2° et 9°, et les nervures extérieures (18) un angle qui est compris entre 5° et 20°, de préférence entre 2° et 16°.

9. Insert de coupe selon l'une des revendications 1 à 8, caractérisé par le fait que la distance entre la pointe de la nervure et la tranchant (13, 20) est comprise entre 0,05 et 0,7 mm, de préférence entre 0,1 et 0,3 mm.

10. Insert de coupe selon l'une des revendications 1 à 9, caractérisé par le fait que, dans une vue de dessus sur la face de coupe, il présente une forme trigone (50) dans le cas de laquelle les tranchants possèdent un bombement (52) en forme de toit formant un angle obtus, et qui, à l'égard d'un axe longitudinal défini par l'angle obtus (52) du bombement en forme de toit et par un coin de coupe (51) opposé, est réalisé à symétrie spéculaire également par la disposition des éléments à former le copeau (18), de préférence un élément (18) à former le copeau étant disposé respectivement sur les axes longitudinaux (53) dans la zone de l'angle obtus (52).

11. Insert de coupe selon l'une des revendications 1 à 10, caractérisé par le fait que le maximum (183) de la crête (18) de la nervure, qui est situé loin du tranchant, ou la hauteur (189) de celle-ci correspondant au plateau de la face de coupe diminue de manière continue ou discontinue de coins de coupe (51, 581) à angle aigu vers des coins (52, 582) à angle obtus ou vers le milieu du tranchant, de préférence les distances ou différences de hauteur (h₁ à h₃, l₁ à l₃) entre les crêtes (183, 189) des nervures et la surface de base (63) et/ou le tranchant (61) diminuant de façon continue ou discontinue de coins de coupe (51, 581) à angle aigu vers des coins (52, 582) à angle obtus ou vers le milieu du tranchant.

12. Insert de coupe selon l'une des revendications 7 à 11, caractérisé par le fait que les distances du maximum (183) des crêtes (18) de nervure, qui est situé loin du tranchant, ou la hauteur (189) de celles-ci correspondant au plateau de la face de coupe, présentent une valeur maximale (h₂) entre les coins de coupe (51, 581) à angle aigu vers le milieu du tranchant ou vers les coins (52, 582) à angle obtus.
